# EUROPEAN PATENT APPLICATION

(11) **EP 1 424 645 A2**
(43) Date of publication of application: **02.06.2004**
(21) Application number: 03026746.2
(22) Date of filing: 21.11.2003
(51) Int. Cl.: G06F 17/60

(54) **Method and system for gathering questionnaire information in an event hall**

(30) Priority: 22.11.2002 JP 2002339631
(71) Applicant: NEC CORPORATION, Tokyo (JP)
(72) Inventor: Sugawara, Toshiyoshi, Minato-ku, Tokyo (JP)
(74) Representative: Betten & Resch

(57) **Abstract**

An information gathering server (40) transmits the contents of a questionnaire to area terminals (20) on a questionnaire start date. That area terminal (20) which has received the contents of the questionnaire transfers the contents of the questionnaire to those portable user terminals (10) which are located in the same area by close-range wireless communication. Each of the portable user terminals (10) inputs an answer to the questionnaire, a name and a personal identification number and transmits them to the area terminal (20) by close-range wireless communication. The area terminal (20) that has received the answer information affixes a hall/area ID and a present date to the answer and transmit it to the information gathering server (40). On a questionnaire end date, a gift getting person is drawn from those persons who have answered the questionnaire, the name of that person is transmitted to that area terminal (20) which corresponds to the person and combination information of the name of the person and the personal identification number is transmitted to the hall terminal. The area terminal (20) that has received the name of the person transfers it to those portable user terminals (10) which are located in the same area by close-range wireless communication.

## Description

### BACKGROUND OF THE INVENTION

### Field of the Invention

The present invention relates to an information gathering system, method, server and program hall, and, more particularly, to an information gathering system, method, server and program in an event hall in particular using portable terminals.

### Description of the Related Art

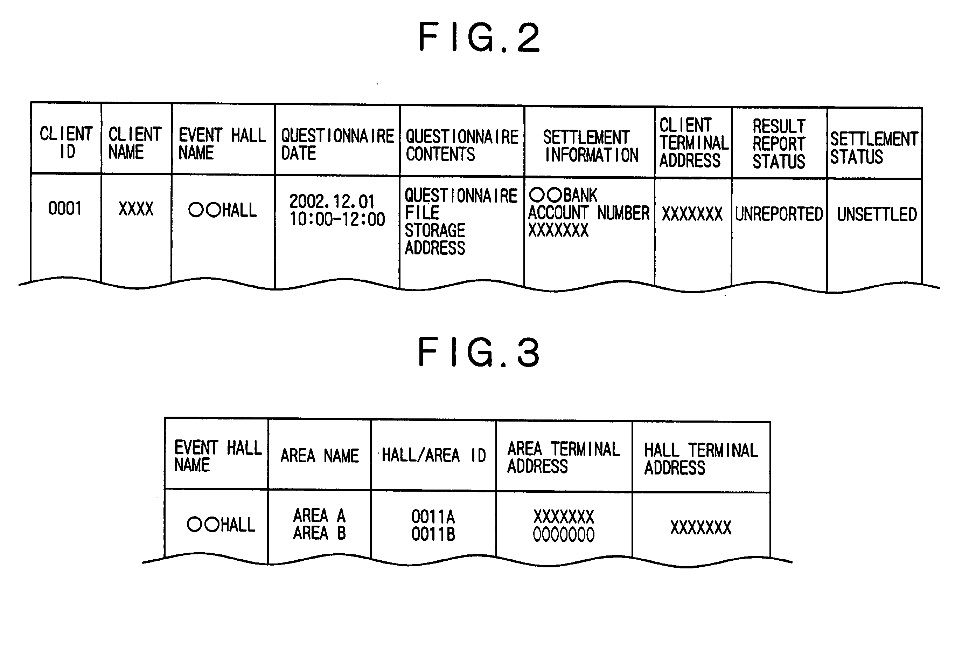

One example of conventional information collection of questionnaires or the like using portable terminals is to store data on persons who answered to questionnaires, compare conditions presented by a client with the stored data on the answerers when the client has requested a questionnaire, extract those answerers who fulfill the conditions and transmit a request for an answer to the questionnaire to portable terminals of the persons. In the prior art, the persons make an answer to the questionnaire by accessing an questionnaire survey server from their portable terminals (see, for example, paragraph "0047" on page 5 of Japanese Patent Laid-Open No. 2002-41762 and Fig. 2 thereof).

The invention described in Japanese Patent Laid-Open No. 2002-41762 however has a problem that as answerers are extracted from those answerers who made answers to old questionnaire surveys, the answerers are limited.

Another problem is that because persons who fulfill the conditions presented by a client are extracted from the answerer data, it is necessary to ask as many answerers as possible to register and provide a data base storing data on the answerers.

In a questionnaire survey in an event hall to which the present invention is directed, it is understood that participants are those persons who have come for the event, so that it is desirable to ask as many people in the event hall as possible to answer a questionnaire without extraction of answerers based on the conditions or the like.

The invention described in Japanese Patent Laid-Open No. 2002-41762 requires connection of the portable terminal of each answerer to the questionnaire survey server over a network at the time of receiving a request for an answer to the questionnaire and at the time of making an answer to the questionnaire. This places a burden on the answerers to pay a communication fee or the like.

### SUMMARY OF THE INVENTION

Accordingly, it is an object of the invention to provide an information gathering system, method, server and program in an event hall, which overcomes the above-described problems.

A first information gathering system according to the invention for use in an event hall performs transmission and reception of questionnaire information between an information gathering server for gathering the questionnaire information based on a questionnaire carry-out schedule for each event hall and contents of a questionnaire and portable user terminals carried by persons who have entered an event hall, has area terminals provided area by area in each event hall for relaying the questionnaire information, performs transmission and reception of the questionnaire information between the information gathering server and the area terminals over an Internet, and performs transmission and reception of the questionnaire information between the area terminals and the portable user terminals by close-range wireless communication.

A second information gathering system according to the invention for use in an event hall comprises portable user terminals carried by persons who have entered an event hall; area terminals provided area by area in the event hall; an information gathering server; a client terminal; a network which connects the area terminals, the client terminal and the information gathering server; a device which allows the information gathering server to register hall-by-hall/area-by-area questionnaire information including event halls and areas targeted for a questionnaire, a questionnaire start date, a questionnaire end date and contents of the questionnaire based on questionnaire request information sent from the client terminal; a device which allows the information gathering server to transmit the contents of the questionnaire to associated area terminals over the network when the questionnaire start date has come; a device by which an area terminal having received the contents of the questionnaire transfers the contents of the questionnaire to those portable user terminals which are located in the same area by close-range wireless communication; a device which allows each of the portable user terminals having received the contents of the questionnaire to input an answer to the questionnaire and transmit the answer to the questionnaire to that area terminal in the same area by close-range wireless communication; and a device which allows the area terminal having received the answer to the questionnaire to affix a hall/area ID and a present date to the answer to the questionnaire and transmit that answer to the questionnaire to the information gathering server over the network, and allows the information gathering server to store those pieces of information.

A third information gathering system according to the invention for use in an event hall comprises portable user terminals carried by persons who have entered an event hall; a hall terminal provided at a gift hand-over place in the event hall; area terminals provided area by area in the event hall; an information gathering server; a client terminal; a network which connects the hall terminal, the area terminals, the client terminal and the information gathering server; a device which allows the information gathering server to register hall-by-hall/area-by-area questionnaire information including event halls and areas targeted for a questionnaire, a questionnaire start date, a questionnaire end date and contents of the questionnaire based on questionnaire request information sent from the client terminal; a device which allows the information gathering server to transmit the contents of the questionnaire to associated area terminals over the network when the questionnaire start date has come; a device by which an area terminal having received the contents of the questionnaire transfers the contents of the questionnaire to those portable user terminals which are located in the same area by close-range wireless communication; a device which allows each of the portable user terminals having received the contents of the questionnaire to input an answer to the questionnaire, a name and a personal identification number and transmit the answer to the questionnaire as answer information to that area terminal in the same area by close-range wireless communication; a device which allows the area terminal having received the answer information to the questionnaire to affix a hall/area ID and a present date to the answer to the questionnaire and transmit that answer to the questionnaire to the information gathering server over the network, and allows the information gathering server to store those pieces of information; a device which allows the information gathering server to draw a gift getting person from those persons who have answered the questionnaire when the questionnaire end date has comes, transmit the name of the gift getting person to that area terminal which corresponds to the gift getting person over the network and transmit combination information of the name of the gift getting person and the personal identification number to that hall terminal which corresponds to the gift getting person over the network; and a device which allows the area terminal having received the name of the gift getting person to transfer the name of the gift getting person to those portable user terminals which are located in the same area by close-range wireless communication.

In the second or third information gathering system according to the invention, the contents of the questionnaire differ from one area to another.

The second or third information gathering system according to the invention further comprises a device which allows the information gathering server to transmit the answer information to the questionnaire to the client terminal over the network and execute a charge settling process when the questionnaire end date has come.

In any one of the information gathering systems mentioned above, the by close-range wireless communication is Bluetooth communication or infrared communication.

A first information gathering server according to the invention is for use in a system having portable user terminals carried by persons who have entered an event hall, area terminals provided area by area in the event hall, a client terminal and a network which connects the area terminals, the client terminal and the information gathering server. Said first information gathering server further comprises a device which registers hall-by-hall/area-by-area questionnaire information including event halls and areas targeted for a questionnaire, a questionnaire start date, a questionnaire end date and contents of the questionnaire based on questionnaire request information sent from the client terminal; a device which transmits the contents of the questionnaire to associated area terminals when the questionnaire start date has come; a device which receives and stores an answer to the questionnaire, a hall/area ID of the area terminal and a present date from the area terminal; and a device which transmits the answer to the questionnaire to the client terminal and performs a charge settling process when the questionnaire end date has come.

A second information gathering server according to the invention is for use in a system having portable user terminals carried by persons who have entered an event hall, a hall terminal provided at a gift hand-over place in the event hall, area terminals provided area by area in the event hall, a client terminal and a network which connects the hall terminal, the area terminals, the client terminal and the information gathering server. Said second information gathering server further comprises a device which registers hall-by-hall/area-by-area questionnaire information including event halls and areas targeted for a questionnaire, a questionnaire start date, a questionnaire end date and contents of the questionnaire based on questionnaire request information sent from the client terminal; a device which transmits the contents of the questionnaire to associated area terminals when the questionnaire start date has come; a device which receives and stores an answer to the questionnaire, a name, a personal identification number, a hall/area ID of the area terminal and a present date from the area terminal; a device which draws a gift getting person from those persons who have answered the questionnaire when the questionnaire end date has comes, transmits the name of the gift getting person to that area terminal which corresponds to the gift getting person and transmits combination information of the name of the gift getting person and the personal identification number to that hall terminal which corresponds to the gift getting person; and a device which transmits the answer to the questionnaire to the client terminal and performs a charge settling process when the questionnaire end date has come.

In the first or second information gathering server according to the invention, the contents of the questionnaire differ from one area to another.

A first information gathering method according to the invention is for use in a system having portable user terminals carried by persons who have entered an event hall, area terminals provided area by area in the event hall, an information gathering server, a client terminal and a network which connects the area terminals, the client terminal and the information gathering server, and comprises the steps of allowing the information gathering server to register hall-by-hall/area-by-area questionnaire information including event halls and areas targeted for a questionnaire, a questionnaire start date, a questionnaire end date and contents of the questionnaire based on questionnaire request information sent from the client terminal; allowing the information gathering server to transmit the contents of the questionnaire to associated area terminals over the network when the questionnaire start date has come; allowing an area terminal having received the contents of the questionnaire to transfer the contents of the questionnaire to those portable user terminals which are located in the same area by close-range wireless communication; allowing each of the portable user terminals having received the contents of the questionnaire to input an answer to the questionnaire and transmit the answer to the questionnaire to that area terminal in the same area by close-range wireless communication; allowing the area terminal having received the answer to the questionnaire to affix a hall/area ID and a present date to the answer to the questionnaire and transmit that answer to the questionnaire to the information gathering server over the network, and allowing the information gathering server to store those pieces of information; and allowing the information gathering server to transmit the answer to the questionnaire to the client terminal over the network and performing a charge settling process when the questionnaire end date has come.

A second information gathering method according to the invention is for use in a system having portable user terminals carried by persons who have entered an event hall, a hall terminal provided at a gift hand-over place in the event hall, area terminals provided area by area in the event hall, an information gathering server, a client terminal and a network which connects the hall terminal, the area terminals, the client terminal and the information gathering server, and comprises the steps of allowing the information gathering server to register hall-by-hall/area-by-area questionnaire information including event halls and areas targeted for a questionnaire, a questionnaire start date, a questionnaire end date and contents of the questionnaire based on questionnaire request information sent from the client terminal; allowing the information gathering server to transmit the contents of the questionnaire to associated area terminals over the network when the questionnaire start date has come; allowing an area terminal having received the contents of the questionnaire to transfer the contents of the questionnaire to those portable user terminals which are located in the same area by close-range wireless communication; allowing each of the portable user terminals having received the contents of the questionnaire to input an answer to the questionnaire, a name and a personal identification number and transmit the answer to the questionnaire as answer information to that area terminal in the same area by close-range wireless communication; allowing the area terminal having received the answer information to the questionnaire to affix a hall/area ID and a present date to the answer to the questionnaire and transmit that answer to the questionnaire to the information gathering server over the network, and allows the information gathering server to store those pieces of information; allowing the information gathering server to draw a gift getting person from those persons who have answered the questionnaire when the questionnaire end date has comes, transmit the name of the gift getting person to that area terminal which corresponds to the gift getting person over the network and transmit combination information of the name of the gift getting person and the personal identification number to that hall terminal which corresponds to the gift getting person over the network; allowing the area terminal having received the name of the gift getting person to transfer the name of the gift getting person to those portable user terminals which are located in the same area by close-range wireless communication; and allowing the information gathering server to transmit the answer to the questionnaire to the client terminal over the network and performing a charge settling process when the questionnaire end date has come.

A first program according to the invention is adapted to an information gathering server in a system having portable user terminals carried by persons who have entered an event hall, area terminals provided area by area in the event hall, an information gathering server, a client terminal and a network which connects the area terminals, the client terminal and the information gathering server, and allows a computer to realize a function of registering hall-by-hall/area-by-area questionnaire information including event halls and areas targeted for a questionnaire, a questionnaire start date, a questionnaire end date and contents of the questionnaire based on questionnaire request information sent from the client terminal; a function of transmitting the contents of the questionnaire to associated area terminals when the questionnaire start date has come; a function of receiving and storing an answer to the questionnaire, a hall/area ID of the area terminal and a present date from the area terminal; and a function of transmitting the answer to the questionnaire to the client terminal and performing a charge settling process when the questionnaire end date has come.

A second program according to the invention is adapted to an information gathering server in a system having portable user terminals carried by persons who have entered an event hall, a hall terminal provided at a gift hand-over place in the event hall, area terminals provided area by area in the event hall, an information gathering server, a client terminal and a network which connects the hall terminal, the area terminals, the client terminal and the information gathering server, and allows a computer to realize a function of registering hall-by-hall/area-by-area questionnaire information including event halls and areas targeted for a questionnaire, a questionnaire start date, a questionnaire end date and contents of the questionnaire based on questionnaire request information sent from the client terminal; a function of transmitting the contents of the questionnaire to associated area terminals when the questionnaire start date has come; a function of receiving and stores an answer to the questionnaire, a name, a personal identification number, a hall/area ID of the area terminal and a present date from the area terminal; a function of drawing a gift getting person from those persons who have answered the questionnaire when the questionnaire end date has comes, transmitting the name of the gift getting person to that area terminal which corresponds to the gift getting person and transmitting combination information of the name of the gift getting person and the personal identification number to that hall terminal which corresponds to the gift getting person; and a function of transmitting the answer to the questionnaire to the client terminal and performing a charge settling process when the questionnaire end date has come.

### BRIEF DESCRIPTION OF THE DRAWINGS

Fig. 1 is a diagram showing the structure of one embodiment of the present invention;
Fig. 2 is a diagram showing one example of information stored in a request-information data base 42;
Fig. 3 is a diagram showing one example of information stored in an event-hall data base 43;
Fig. 4 is a diagram showing one example of information stored in a hall-by-hall/area-by-area questionnaire-information data base 44;
Fig. 5 is a diagram showing one example of information stored in a questionnaire-answer-information data base 45; and
Fig. 6 is a flowchart illustrating the operation of the embodiment of the invention.

### DETAILED DESCRIPTION OF THE PREFERRED EMBODIMENT

A preferred embodiment of the invention will be described below in detail with reference to the accompanying drawings.

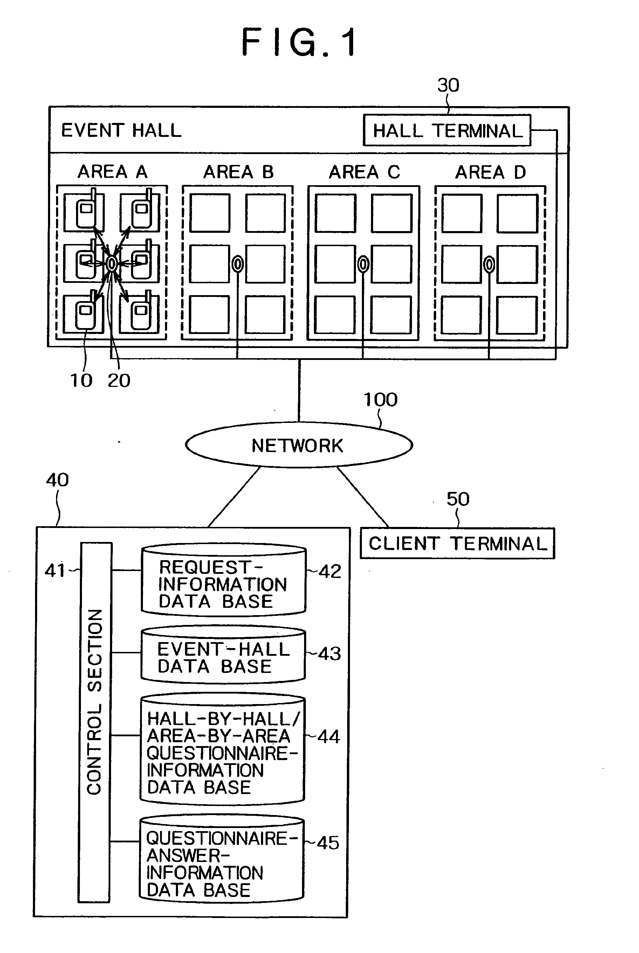

Fig. 1 is a diagram showing the structure of one embodiment of the present invention, which has portable user terminals 10, area terminals 20, a hall terminal 30, an information gathering server 40, a client terminal 50 and a network 100, such as the Internet, which connects the area terminals 20, the hall terminal 30, the client terminal 50 and the information gathering server 40.

The portable user terminal 10 is a portable terminal, such as a portable telephone, a PHS (Personal Handyphone System) or a PDA (Personal Digital Assistance), which is carried around by a person who is in an event hall. The portable user terminal 10 has a function of executing close-range wireless communication with the area terminals 20, a function of displaying the contents of a questionnaire sent from each area terminal 20 and a function of entering or selecting an answer to the questionnaire. Here, "by close-range wireless communication" means Bluetooth or infrared communication or the like, for example.

The area terminal 20 is an information processing terminal placed in each area in the event hall. The area terminal 20 has a function of executing close-range wireless communication with the portable user terminals 10, and a function of exchanging data with the information gathering server 40 over the network 100 and has a hall/area ID registered beforehand to identify each area in the event hall. The distance over which the area terminals 20 can carry out close-range wireless communication is such that the area terminals 20 can communicate with the portable user terminals 10 in the same area but cannot communicate with the portable user terminals 10 which are located in a different area. Although four areas A to D are shown in the event hall in Fig. 1, the number of areas may be one or any other arbitrary number.

The hall terminal 30 is an information processing terminal, such as a portable telephone, PHS, PDA or personal computer, which is placed at the reception desk or the information desk in the event hall, and has a function of receiving information on gift getting persons from the information gathering server 40 and displaying the information.

The information gathering server 40 is an information processing terminal, such as a work station server or so, which a service provider who does questionnaire surveys has. The information gathering server 40 has a control section 41, such as a CPU (Central Processing Unit), which performs the general processing under the control of a program, a request-information data base 42, an event-hall data base 43, a hall-by-hall/area-by-area questionnaire-information data base 44 and a questionnaire-answer-information data base 45.
the control section 41 has a function of storing the date and the event hall on and in which a requested questionnaire is executed, and the contents of the questionnaire and so forth and instructing an area terminal 20 in question to execute the questionnaire over the network 100 when the execution date for the questionnaire, a function of reporting questionnaire answer data received from the area terminals 20 to the client terminal 50, a charge setting function of requesting an unillustrated financial organization server of debiting a charge from the bank account of the client and a function of deciding a gift getting person from answerers to the questionnaire by drawing and notifies the gift getting person to the portable user terminals 10 and the hall terminal 30 via the area terminal 20.

Stored in the request-information data base 42 are data on a client ID, a client name, the name of the event hall where the questionnaire is executed, a questionnaire date (event holding date ), the contents of the questionnaire, settlement information (the bank account or the like of the client), a client terminal address, a result report status and a settlement status, as shown in Fig. 2 (which shows one example of information stored in the request information data base 42). Those pieces of data may be questionnaire request information from the client terminal 50 defined by a predetermined format and automatically stored in the request-information data base 42 when the information gathering server 40 receives the questionnaire request information, or may be input separately by a person in charge.

Data on the name of the event hall, area names, hall/area IDs, the addresses of the area terminals 20 placed in association with the individual areas and the address of the hall terminal 30 are stored in the event-hall data base 43 beforehand as shown in Fig. 3 (which shows one example of information stored in the event-hall data base 43). The hall/area ID is, for example, a combination ID of an event hall and an area; for example, the hall/area ID "0011A" represents the event hall by "0011" and the area by "A". This hall/area ID can allow an event hall and an area therein to be identifiable. In case where there is one area, "0011" becomes the hall/area ID.

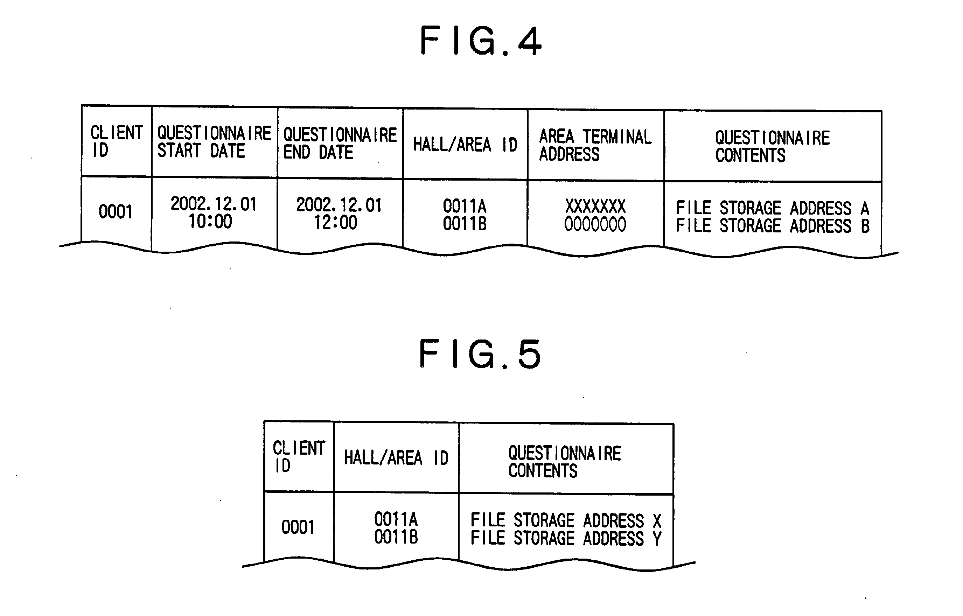

Stored in the hall-by-hall/area-by-area questionnaire-information data base 44 are data on the client ID, a questionnaire start date, a questionnaire end date, the hall/area ID, area terminal addresses and the contents of the questionnaire as shown in Fig. 4 (which shows one example of information stored in the hall-by-hall/area-by-area questionnaire-information data base 44). With regard to the questionnaire start date and the questionnaire end date, event perticipants should be gathered in an event hall, so that the questionnaire start date should be set to, for example, a date on which the event will start or a given time before that date, and the questionnaire end date should be set to, for example, a date on which the event will end.

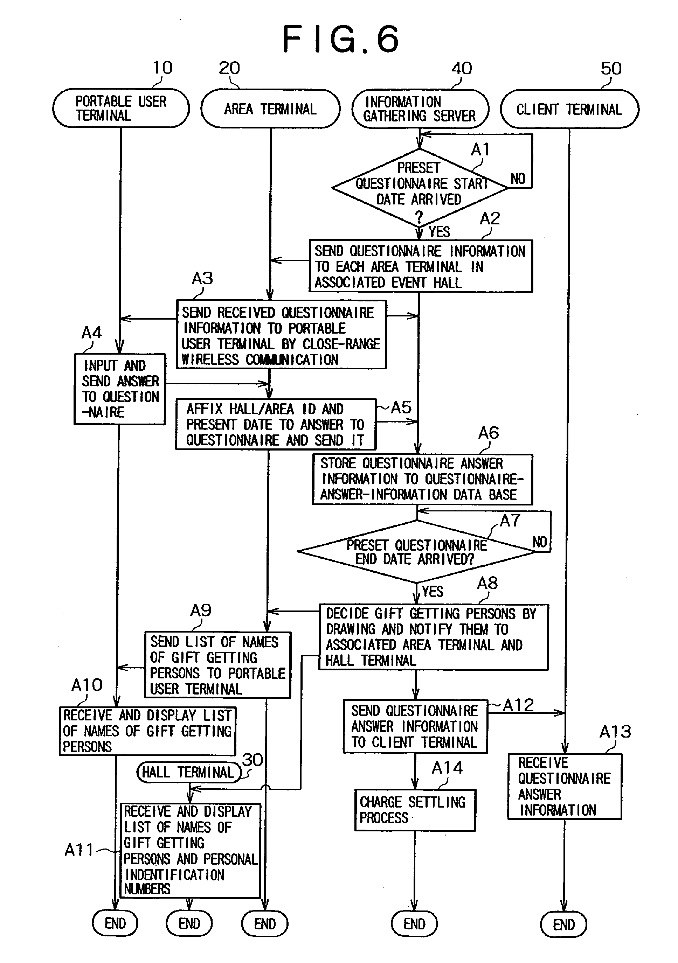

Stored in the questionnaire-answer-information data base 45 are data on the client ID, the hall/area ID and the contents of the questionnaire or questionnaire answer data from the portable user terminals 10 in each area as shown in Fig. 5 (which shows one example of information stored in the questionnaire-answer-information data base 45).

The client terminal 50 has a function of transmitting questionnaire request information to the information gathering server 40 over the network 100 and a function receiving and displaying questionnaire result data from the information gathering server 40.

The operation of the embodiment of the invention will be discussed below referring to Figs. 1 to 6. Fig. 6 is a flowchart illustrating the operation of the embodiment of the invention.

The following description on the operation is premised on that questionnaire request information from a client has already been stored in the information gathering server 40. With regard to the questionnaire request information, a predetermined format may be defined beforehand, the control section 41 may generate a client ID when the information gathering server 40 receives the questionnaire request information from the client terminal 50 and automatically stores the questionnaire request information in the request-information data base 42 based on the client ID or the questionnaire request information may be input separately by a person in charge after it is received from the client terminal 50. Those pieces of data are stored in the request-information data base 42 as shown in Fig. 2. Based on those pieces of data and the event hall data as shown in Fig. 3, the control section 41 generates the questionnaire information corresponding to the client ID shown in Fig. 4 and stores it in the hall-by-hall/area-by-area questionnaire-information data base 44.

Referring to Fig. 6 based on the aforementioned premise, the control section 41 of the information gathering server 40 regularly refers to the hall-by-hall/area-by-area questionnaire-information data base 44 and searches for any questionnaire information whose questionnaire start date is the present date (step A1). If there is such questionnaire information, the control section 41 transmits the contents of the questionnaire to the associated area terminals 20 based on the hall-by-hall/area-by-area questionnaire-information data base 44. In case where different questionnaire contents are set at this time for the area terminals 20 in an area whose hall/area ID is "0011A" and the area terminals 20 in an area whose hall/area ID is "0011B" as shown in Fig. 4, the control section 41 transmits the different questionnaire contents to the respective area terminals 20. In case where a plurality of areas can do with the same contents of the questionnaire, the same contents of the questionnaire are of course registered for the individual areas in the hall-by-hall/area-by-area questionnaire-information data base 44 (step A2).

The area terminals 20 provided in the areas having area IDs of "A" and "B" in the event hall with an event hall ID of "0011" receive the respective questionnaire contents and transmits them to the portable user terminals 10 located in the respective areas by close-range wireless communication. The contents of the questionnaire include notification that those in the answerers who are selected by drawing will be provided with a present and a request for entry of the name of each answerer and a personal identification number for verification of a gift getting person, in addition to the keystone and items of the questionnaire. As the personal identification number is used only to verify the person at the time of receiving a gift, it may be something determined by each answerer, such as a birth date (step A3). The contents of the questionnaire transmitted from the area terminal 20 close-range wireless communication is received by the portable user terminals 10 in the same area. The owners of the portable user terminals 10 input an answer to the questionnaire and the name of the answerer and the personal identification number for verification of a gift getting person, and then transmits the information to the area terminals 20 by close-range wireless communication (step A4). The area terminal 20 which has received the contents of the answer to the questionnaire affixes the contents with the present date and the hall/area ID previously set inside the area terminal 20 and transmits the resultant information to the information gathering server 40 (step A5).

In the information gathering server 40 which has received the contents of the answer to the questionnaire, the present date and the hall/area ID from the area terminals 20, the control section 41 acquires the corresponding client ID by referring to the hall-by-hall/area-by-area questionnaire-information data base 44 based on the present date and the hall/area ID. Then, the control section 41 stores the contents of the answer to the questionnaire in the questionnaire-answer-information data base 45 in association with the client ID and the hall/area ID (step A6). Steps A4 to A6 are repeated every time an answer comes from any portable user terminal 10.

The control section 41 in the information gathering server 40 regularly refers to the hall-by-hall/area-by-area questionnaire-information data base 44 to search for any client ID for the questionnaire information whose questionnaire end date is the present date (step A7). If there is such a client ID, the control section 41 draws and decides a preset number of gift getting persons from the individual answerers stored in the file of the contents of the answer to the questionnaire corresponding to the associated client ID by referring to the questionnaire-answer-information data base 45. Then, the control section 41 extracts the names of gift getting persons and their personal identification numbers from the contents of the answer of the selected persons and transmits them to the associated area terminal 20 and hall terminal 30. At this time, the area terminal 20 is informed of only the names of the selected persons and the hall terminal 30 is informed of a correlation list of the names of the selected persons and their personal identification numbers (step A8).

The associated area terminal 20 receives the list of the names of the selected persons and transmits it to the portable user terminals 10 in the same area (step A9). As each portable user terminal 10 receives and displays only the names of the selected persons, the user decides whether or not the user is selected (step A10). The hall terminal 30 receives the correlation list of the names of the selected persons and their personal identification numbers (step A11). Thereafter, those selected go to the hall terminal 30, tell their names and personal identification numbers to a person in charge who collates the informed names and personal identification numbers with the names and personal identification numbers notified from the information gathering server 40 if they match, and give gifts to the persons who have matches. As any person who has not been selected gives a false name and attempts to get a gift does not known the personal identification number of a properly selected person, this system can prevent illegitimate acquisition of a gift.

Following step A8, the control section 41 refers to the questionnaire-answer-information data base 45 to acquire the contents of the answer of each answerer stored in association with the client ID in Fig. A8 and transmits them as questionnaire answer information to the client terminal 50 corresponding to the client ID stored in the request-information data base 42, and the client terminal 50 receives the questionnaire answer information. At this time, the control section 41 can collect answer data of the individual answerers and generate and transmit edited data (steps A12 and A13).

Finally, the control section 41 refers to the request-information data base 42 to register a report being done or the reporting date in the result report field for the client ID. Then, the control section 41 acquires the settlement information of the client, requests an unillustrated financial organization server to do a settling process (e.g., transfer from the account of the client to the local account), receives a report of the settlement done and registers a settlement being done or the settlement date in the settlement status field in the request-information data base 42 (step A14).

As the invention permits transmission and reception of data on a questionnaire to and from portable user terminals via a close-range wireless communication terminal placed in an event hall, an answerer can receive and answer the questionnaire over the Internet or the like without accessing the information gathering server. This brings about an advantage of relieving of a burden, such as a communication fee or the like, from the answerers.

Because close-range wireless communication terminals can be placed area by area in an event hall and different questionnaire contents may be set for different areas according to the invention, versatile surveys become possible for each client.

As users in an event hall are targets for a questionnaire survey in the invention, the users in all the areas in the event hall become targets, thus advantageously eliminating the need to provide the information gathering server with a device which registers personal information or so of users and extracts users based on the conditions.

An information gathering server 40 transmits the contents of a questionnaire to area terminals 20 on a questionnaire start date. That area terminal 20 which has received the contents of the questionnaire transfers the contents of the questionnaire to those portable user terminals 10 which are located in the same area by close-range wireless communication. Each of the portable user terminals 10 inputs an answer to the questionnaire, a name and a personal identification number and transmits them to the area terminal 20 by close-range wireless communication. The area terminal 20 that has received the answer information affixes a hall/area ID and a present date to the answer and transmit it to the information gathering server 40. On a questionnaire end date, a gift getting person is drawn from those persons who have answered the questionnaire, the name of that person is transmitted to that area terminal 20 which corresponds to the person and combination information of the name of the person and the personal identification number is transmitted to the hall terminal. The area terminal 20 that has received the name of the person transfers it to those portable user terminals 10 which are located in the same area by close-range wireless communication.

## Claims

1. An information gathering system in an event hall which performs transmission and reception of questionnaire information between an information gathering server (40) for gathering said questionnaire information based on a questionnaire carry-out schedule for each event hall and contents of a questionnaire and portable user terminals (10) carried by persons who have entered an event hall, has area terminals (20) provided area by area in each event hall for relaying said questionnaire information, performs transmission and reception of said questionnaire information between said information gathering server (40) and said area terminals (20) over an Internet (100), and performs transmission and reception of said questionnaire information between said area terminals (20) and said portable user terminals (10) by close-range wireless communication.

2. An information gathering system in an event hall **characterized by** comprising:
portable user terminals (10) carried by persons who have entered an event hall;
area terminals (20) provided area by area in said event hall;
an information gathering server (40);
a client terminal (50);
a network (100) which connects said area terminals (20), said client terminal (50) and said information gathering server (40);
a device which allows said information gathering server (40) to register hall-by-hall/area-by-area questionnaire information including event halls and areas targeted for a questionnaire, a questionnaire start date, a questionnaire end date and contents of said questionnaire based on questionnaire request information sent from said client terminal (50);
a device which allows said information gathering server (40) to transmit said contents of said questionnaire to associated area terminals (20) over said network when said questionnaire start date has come;
a device by which an area terminal (20) having received said contents of said questionnaire transfers said contents of said questionnaire to those portable user terminals (10) which are located in the same area by close-range wireless communication;
a device which allows each of said portable user terminals (10) having received said contents of said questionnaire to input an answer to said questionnaire and transmit said answer to said questionnaire to that area terminal (20) in the same area by close-range wireless communication; and
a device which allows said area terminal (20) having received said answer to said questionnaire to affix a hall/area ID and a present date to said answer to said questionnaire and transmit that answer to said questionnaire to said information gathering server (40) over said network, and allows said information gathering server (40) to store those pieces of information.

3. An information gathering system in an event hall **characterized by** comprising:
portable user terminals (10) carried by persons who have entered an event hall;
a hall terminal provided at a gift hand-over place in said event hall;
area terminals (20) provided area by area in said event hall;
an information gathering server (40);
a client terminal (50);
a network which connects said hall terminal, said area terminals (20), said client terminal (50) and said information gathering server (40);
a device which allows said information gathering server (40) to register hall-by-hall/area-by-area questionnaire information including event halls and areas targeted for a questionnaire, a questionnaire start date, a questionnaire end date and contents of said questionnaire based on questionnaire request information sent from said client terminal (50);
a device which allows said information gathering server (40) to transmit said contents of said questionnaire to associated area terminals (20) over said network when said questionnaire start date has come;
a device by which an area terminal (20) having received said contents of said questionnaire transfers said contents of said questionnaire to those portable user terminals (10) which are located in the same area by close-range wireless communication;
a device which allows each of said portable user terminals (10) having received said contents of said questionnaire to input an answer to said questionnaire, a name and a personal identification number and transmit said answer to said questionnaire as answer information to that area terminal (20) in the same area by close-range wireless communication;
a device which allows said area terminal (20) having received said answer information to said questionnaire to affix a hall/area ID and a present date to said answer to said questionnaire and transmit that answer to said questionnaire to said information gathering server (40) over said network, and allows said information gathering server (40) to store those pieces of information;
a device which allows said information gathering server (40) to draw a gift getting person from those persons who have answered said questionnaire when said questionnaire end date has comes, transmit the name of said gift getting person to that area terminal (20) which corresponds to said gift getting person over said network and transmit combination information of said name of said gift getting person and said personal identification number to that hall terminal which corresponds to said gift getting person over said network; and
a device which allows said area terminal (20) having received said name of said gift getting person to transfer said name of said gift getting person to those portable user terminals (10) which are located in the same area by close-range wireless communication.

4. The information gathering system according to claim 2 or 3, **characterized in that** said contents of said questionnaire differ from one area to another.

5. The information gathering system according to claim 2 or 3, **characterized by** further comprising a device which allows said information gathering server (40) to transmit said answer information to said questionnaire to said client terminal (50) over said network and execute a charge settling process when said questionnaire end date has come.

6. The information gathering system according to any one of claims 1 to 5, **characterized in that** said by close-range wireless communication is Bluetooth communication or infrared communication.

7. An information gathering server (40) **characterized by** comprising:
portable user terminals (10) carried by persons who have entered an event hall;
area terminals (20) provided area by area in said event hall;
a client terminal (50);
a network which connects said area terminals (20), said client terminal (50) and said information gathering server (40);
a device which registers hall-by-hall/area-by-area questionnaire information including event halls and areas targeted for a questionnaire, a questionnaire start date, a questionnaire end date and contents of said questionnaire based on questionnaire request information sent from said client terminal (50);
a device which transmits said contents of said questionnaire to associated area terminals (20) when said questionnaire start date has come;
a device which receives and stores an answer to said questionnaire, a hall/area ID of said area terminal (20) and a present date from said area terminal (20); and
a device which transmits said answer to said questionnaire to said client terminal (50) and performs a charge settling process when said questionnaire end date has come.

8. An information gathering server (40) **characterized by** comprising:
portable user terminals (10) carried by persons who have entered an event hall;
a hall terminal provided at a gift hand-over place in said event hall;
area terminals (20) provided area by area in said event hall;
a client terminal (50);
a network which connects said hall terminal, said area terminals (20), said client terminal (50) and said information gathering server (40);
a device which registers hall-by-hall/area-by-area questionnaire information including event halls and areas targeted for a questionnaire, a questionnaire start date, a questionnaire end date and contents of said questionnaire based on questionnaire request information sent from said client terminal (50);
a device which transmits said contents of said questionnaire to associated area terminals (20) when said questionnaire start date has come;
a device which receives and stores an answer to said questionnaire, a name, a personal identification number, a hall/area ID of said area terminal (20) and a present date from said area terminal (20);
a device which draws a gift getting person from those persons who have answered said questionnaire when said questionnaire end date has comes, transmits the name of said gift getting person to that area terminal (20) which corresponds to said gift getting person and transmits combination information of said name of said gift getting person and said personal identification number to that hall terminal which corresponds to said gift getting person; and
a device which transmits said answer to said questionnaire to said client terminal (50) and performs a charge settling process when said questionnaire end date has come.

9. The information gathering server (40) according to claim 7 or 8, **characterized in that** said contents of said questionnaire differ from one area to another.

10. An information gathering method in a system having portable user terminals (10) carried by persons who have entered an event hall, area terminals (20) provided area by area in said event hall, an information gathering server (40), a client terminal (50) and a network which connects said area terminals (20), said client terminal (50) and said information gathering server (40), **characterized by** comprising the steps of:
allowing said information gathering server (40) to register hall-by-hall/area-by-area questionnaire information including event halls and areas targeted for a questionnaire, a questionnaire start date, a questionnaire end date and contents of said questionnaire based on questionnaire request information sent from said client terminal (50);
allowing said information gathering server (40) to transmit said contents of said questionnaire to associated area terminals (20) over said network when said questionnaire start date has come;
allowing an area terminal (20) having received said contents of said questionnaire to transfer said contents of said questionnaire to those portable user terminals (10) which are located in the same area by close-range wireless communication;
allowing each of said portable user terminals (10) having received said contents of said questionnaire to input an answer to said questionnaire and transmit said answer to said questionnaire to that area terminal (20) in the same area by close-range wireless communication;
allowing said area terminal (20) having received said answer to said questionnaire to affix a hall/area ID and a present date to said answer to said questionnaire and transmit that answer to said questionnaire to said information gathering server (40) over said network, and allowing said information gathering server (40) to store those pieces of information; and
allowing said information gathering server (40) to transmit said answer to said questionnaire to said client terminal (50) over said network and performing a charge settling process when said questionnaire end date has come.

11. An information gathering method in a system having portable user terminals (10) carried by persons who have entered an event hall, a hall terminal provided at a gift hand-over place in said event hall, area terminals (20) provided area by area in said event hall, an information gathering server (40), a client terminal (50) and a network which connects said hall terminal, said area terminals (20), said client terminal (50) and said information gathering server (40), **characterized by** comprising the steps of:
allowing said information gathering server (40) to register hall-by-hall/area-by-area questionnaire information including event halls and areas targeted for a questionnaire, a questionnaire start date, a questionnaire end date and contents of said questionnaire based on questionnaire request information sent from said client terminal (50);
allowing said information gathering server (40) to transmit said contents of said questionnaire to associated area terminals (20) over said network when said questionnaire start date has come;
allowing an area terminal (20) having received said contents of said questionnaire to transfer said contents of said questionnaire to those portable user terminals (10) which are located in the same area by close-range wireless communication;
allowing each of said portable user terminals (10) having received said contents of said questionnaire to input an answer to said questionnaire, a name and a personal identification number and transmit said answer to said questionnaire as answer information to that area terminal (20) in the same area by close-range wireless communication;
allowing said area terminal (20) having received said answer information to said questionnaire to affix a hall/area ID and a present date to said answer to said questionnaire and transmit that answer to said questionnaire to said information gathering server (40) over said network, and allows said information gathering server (40) to store those pieces of information;
allowing said information gathering server (40) to draw a gift getting person from those persons who have answered said questionnaire when said questionnaire end date has comes, transmit the name of said gift getting person to that area terminal (20) which corresponds to said gift getting person over said network and transmit combination information of said name of said gift getting person and said personal identification number to that hall terminal which corresponds to said gift getting person over said network;
allowing said area terminal (20) having received said name of said gift getting person to transfer said name of said gift getting person to those portable user terminals (10) which are located in the same area by close-range wireless communication; and
allowing said information gathering server (40) to transmit said answer to said questionnaire to said client terminal (50) over said network and performing a charge settling process when said questionnaire end date has come.

12. A program which is adapted to an information gathering server (40) in a system having portable user terminals (10) carried by persons who have entered an event hall, area terminals (20) provided area by area in said event hall, an information gathering server (40), a client terminal (50) and a network which connects said area terminals (20), said client terminal (50) and said information gathering server (40), and which allows a computer to realize:
a function of registering hall-by-hall/area-by-area questionnaire information including event halls and areas targeted for a questionnaire, a questionnaire start date, a questionnaire end date and contents of said questionnaire based on questionnaire request information sent from said client terminal (50);
a function of transmitting said contents of said questionnaire to associated area terminals (20) when said questionnaire start date has come;
a function of receiving and storing an answer to said questionnaire, a hall/area ID of said area terminal (20) and a present date from said area terminal (20); and
a function of transmitting said answer to said questionnaire to said client terminal (50) and performing a charge settling process when said questionnaire end date has come.

13. A program which is adapted to an information gathering server (40) in a system having portable user terminals (10) carried by persons who have entered an event hall, a hall terminal provided at a gift hand-over place in said event hall, area terminals (20) provided area by area in said event hall, an information gathering server (40), a client terminal (50) and a network which connects said hall terminal, said area terminals (20), said client terminal (50) and said information gathering server (40), and which allows a computer to realize:
a function of registering hall-by-hall/area-by-area questionnaire information including event halls and areas targeted for a questionnaire, a questionnaire start date, a questionnaire end date and contents of said questionnaire based on questionnaire request information sent from said client terminal (50);
a function of transmitting said contents of said questionnaire to associated area terminals (20) when said questionnaire start date has come;
a function of receiving and stores an answer to said questionnaire, a name, a personal identification number, a hall/area ID of said area terminal (20) and a present date from said area terminal (20);
a function of drawing a gift getting person from those persons who have answered said questionnaire when said questionnaire end date has comes, transmitting the name of said gift getting person to that area terminal (20) which corresponds to said gift getting person and transmitting combination information of said name of said gift getting person and said personal identification number to that hall terminal which corresponds to said gift getting person; and
a function of transmitting said answer to said questionnaire to said client terminal (50) and performing a charge settling process when said questionnaire end date has come.
